Europäisches Patentamt

European Patent Office

Office européen des brevets

(19)

(11) Publication number: **0 234 571**
**A2**

## (12) EUROPEAN PATENT APPLICATION

(21) Application number: **87102702.5**

(22) Date of filing: **25.02.87**

(51) Int. Cl.³: **C 04 B 35/56**
**C 04 B 35/64**

(30) Priority: **28.02.86 SE 8600903**

(43) Date of publication of application:
**02.09.87 Bulletin 87/36**

(84) Designated Contracting States:
**DE FR GB IT**

(71) Applicant: **ASEA CERAMA AB**

**S-915 00 Robertsfors(SE)**

(72) Inventor: **Adlerborn, Jan**
**Granbacken 10**
**S-915 00 Robertsfors(SE)**

(72) Inventor: **Hermansson, Leif**
**Johan Vales Väg 9**
**S-915 00 Robertsfors(SE)**

(74) Representative: **Boecker, Joachim, Dr.-Ing.**
**Rathenauplatz 2-8**
**D-6000 Frankfurt a.M. 1(DE)**

(54) **Method of manufacturing densified bodies of silicon carbide.**

(57) Method of manufacturing densified bodies of silicon carbide of at least nearly theoretical density by isostatic pressing of a powder of silicon carbide or of a body preformed from the powder at a temperature of at least 1700°C and a pressure of at least 50 MPa. According to the invention the powder used during the manufacture consists of a powder having a mean grain size of less than 1 micrometer, from which grains with a larger size than 2.5 micrometers have been removed, so that the remaining content of grains having a size larger than 2.5 micrometers amounts to at most 1 per cent by weight, preferably at most 0.5 per cent by weight. According to a particularly preferred embodiment, all grains having a size larger than 1 micrometer are removed from the powder before the powder is used for the production of densified bodies.

EP 0 234 571 A2

ASEA CERAMA AB
S-915 00 Robertsfors / Sweden

Method of manufacturing densified bodies of silicon carbide

The invention relates to a method of manufacturing densified bodies of silicon carbide according to the precharacterising part of claim 1.

Fully dense silicon carbide is a ceramic having very good strength properties and thermal properties. The wear resistance is very good and so is the corrosion resistance. It is therefore well suited for use in high-temperature applications such as components in advanced combustion engines. The advantage of using a ceramic over conventional construction materials in these applications is, in addition to the lower density of the ceramic, above all the possibility of being able to utilize a higher working temperature and hence obtaining a more complete combustion of fuels and a higher efficiency.

It is known that bodies of silicon carbide can be manufactured by isostatic pressing of a powder of silicon carbide or of bodies preformed from that powder. In the SE-A-7909205-2 (Publication No. 425 361) it is stated that during such manufacture the pressure should amount to at least 50 MPa, preferably to at least 100 MPa, and the temperature to at least $1700^{\circ}C$, preferably to at least $1800^{\circ}C$ - $2000^{\circ}C$. Nothing is stated concerning the properties of the used powder and the used sintering agents, if any; nor is anything stated concerning the properties of a product manufactured

21 844 PE
0234571

from the powder. EP-B-0 072 141 describes the manufacture of practically pore-free bodies of alpha- and/or beta-silicon carbide powder without the use of sintering agents by isostatic pressing at a pressure of 100 - 400 MPa and a temperature of $1900^{\circ}$C - $2300^{\circ}$C. In that connection there is used a powder with a particle size of 4 micrometers and finer (measured in accordance with the BET method, a method for measuring the average particle size).

The invention aims at a method of the above-mentioned kind making it possible to manufacture such densified bodies of silicon carbide of at least nearly theoretical density at temperatures which are considerably lower than $1900^{\circ}$C, also without the use of sintering agents.

To achieve this objective the invention suggests a method according to the introductory part of Claim 1, which is characterized by the features of the characterizing part of Claim 1.

Further developments of the invention are characterized by the features of the additional claims.

The possibility of manufacturing such highly densified bodies at lower temperatures is an advantage for various reasons. One reason is suppressed grain growth during the sintering, which results in increased mechanical strength of the sintered body; another reason is that the possibilities of controlling reactions between encapsulating materials and silicon carbide are facilitated; a further reason is that the stresses on the equipment used are reduced. The invention also facilitates achieving a fully dense body at temperatures both higher and lower than $1900^{\circ}$C. Achieving a nearly theoretical density is of great importance for avoiding degradation phenomena, such as a slow crack growth and creeping. It is also a condition for achieving a high strength. According to the invention, the favourable results are attained by the use of a powder having a very small mean grain size, from which larger grains are removed before the powder is used during the manufacture of fully dense bodies of the powder.

Preferably the remaining content of grains having a size of more than 2.5 micrometers amounts to at most 0.5 per cent by weight. The size of the largest grains in the original powder is suitably smaller than 8 micrometers and preferably at most 6 micrometers. The mean grain size is determined in conventional ways as the 50 weight per cent limit (the $d_{50}$ value) from the grain size distribution curve obtained by sedigraph, coulter-counter, pipette centrifuge or similar methods or indirectly by determining the specific surface area (BET), the mean grain size being in micrometers:

$$\frac{6}{\text{specific surface area } (m^2/g) \times \text{density } (g/cm^3)}$$

For silicon carbide the density is 3.21 $g/cm^3$. By the size of a grain is meant the dimension of the grain in the direction of its longest extension.

A feasible explanation of the favourable results obtained by the method according to the invention is that local accumulations of relatively large grains, and hence local areas which are difficult to densify by sintering, are avoided. In addition, grain boundaries between relatively large grains, and hence higher stress concentrations occurring at such grain boundaries, are avoided. If there are no grains at all with a size larger than 2.5 micrometers in the powder, there are, of course, no accumulations at all of the kind mentioned, and if the content of grains with a grain size larger than 2.5 micrometers is at most 1 per cent by weight, preferably at most 0.5 per cent by weight, it has proved that the probability is negligible that accumulation 0234571 relatively large grains will form, which would render the sintering difficult or which would give rise to grain boundaries weakening the mechanical strength of the sintered body. In other words, the probability of the occurrence of a local uneven microstructure of the sintered body is negligible. According to a particularly preferred embodiment of the invention, all grains having a size larger than 1 micrometer are removed from the powder before it is used for the manufacture of fully dense bodies.

The powder used for the method according to the invention can be manufactured from commercially available qualities by removing grains having a size larger than 2.5 micrometers and larger than 1 micrometer, respectively, such as by milling, sieving, sedimentation, or by milling followed by sieving or sedimention.

The silicon carbide may consist of alpha silicon carbide or beta silicon carbide, or mixtures thereof. In addition to SiC, the material in the powder may include carbon, silicon and oxygen, originating from the manufacture of the silicon carbide, in conventional contents. Preferably no sintering agents are added, but it is possible, per se, to use sintering agents such as aluminum or boron.

The powder is preferably preformed into a preformed body. This can take place by loose sintering, that is, by sintering a powder, filled into a cavity, in vacuum or a protective gas so as to form a coherent body but without any significant densification taking place. This can also be done by subjecting the powder to an isostatic compaction, the powder for example being arranged in a sealed capsule of a yielding material, such as a capsule of plastics. The compaction can be carried out with advantage without the use of a binder at room temperature or other temperature which is considerably lower than the temperature during the compaction in connection with the sintering. The product can thereafter be given the desired shape by means of machining. For the preforming it is also possible to use, inter alia, conventional technique for the manufacture of ceramic goods. In that connection the powder is usually mixed prior to the forming with a temporary binder, for example methyl cellulose, cellulose nitrate, an acrylic binder, a wax, or a mixture of waxes. After the preforming, the binder is driven off by heating rendering the preformed powder body in all essentials free from binder.

The powder or the body preformed from the powder is enclosed, before being subjected to isostatic pressing at the sintering temperature, in a capsule, preferably of glass, such as a glass having a high melting temperature, for example Vycor glass or quartz glass. Instead of using glass, another encapsulating material can be used which is yielding at the sintering temperature, such as molybdenum or tantalum.

For the reasons given above, the isostatic pressing is carried out preferably at a temperature below $1900^{\circ}$C. The pressure preferably amounts to at least 100 MPa, suitably to 100 - 400 MPa.

The invention will be explained in greater detail with reference to the following examples.

Example 1

A fine-grained commercial powder of alpha silicon carbide with a specific surface area of 14.8 $m^2$/g (measured according to the BET method) has a mean grain size smaller than 1 micrometer and 2.5 per cent by weight grains with sizes larger than 2.5 micrometers but smaller than 8 micrometers.

It contains, as impurities from its manufacture, 0.39% C, 0.12% Si, 0.81% O, less than 0.10% Al, Fe, Ti in total and less than 0.01% Na, Mg, Ca in total. Here and in the rest of the application, "%" refers to percentage by weight.

This powder is dispersed in an ammonia solution, which after the addition of the powder has a pH-value of 10. The resulting suspension has a content of silicon carbide of 3 per cent by volume. After sedimentation for 48 hours, a sediment is obtained containing the main part of the coarser grains on the bottom of the used vessel and a milky suspension above it. The suspension is separated and transferred into another vessel where it is acidified by nitric acid. This causes the silicon carbide grains to become flocculated and drop to the bottom of the vessel. After separation of the water fraction, the residual liquid is evaporated from the sedimented silicon carbide. This contains only silicon carbide grains with a grain size less than 1 micrometer and thus no grains with a grain size larger than 1 micrometer. The specific surface area is 18.5 $m^2$/g.

The powder is located in a capsule of polyvinyl chloride having a shape which is uniform with and larger than the intended shape of the finished, sintered object, and is subjected to isostatic compaction at 300 MPa at room temperature. The preformed body thus obtained has a density of 52.5-54 per cent of the theoretical density.

The performed body is subjected, encapsulated in an evacuated glass capsule, to an isostatic pressing at 1875°C and 200 MPa for 1 hour. The density of the product then obtained is 3.19 g/$cm^3$. When manufacturing a corresponding product of the same alpha silicon carbide powder, from which no coarser grains have been removed, the density is only 3.07 g/$cm^3$. The strength (bending strength), determined on sliced out rod-shaped specimens of 3 x 3 x 40 mm from products manufactured from the powder from which larger grains have been removed, is 50 per cent higher than in similar rod-shaped specimens sliced out from products manufactured from the powder from which no grains have been removed.

When carrying out the an STSR test (Stepped Temperature Stress Rupture) on sliced out rod-shaped specimens from products manufactured under the conditions stated above, partly from powder from which larger grains have been removed, partly from powder from which grains have not been removed, the first-mentioned specimens withstand a given mechanical load at a considerably higher temperature. During the test, the rod-shaped specimens are loaded (4-point load) with 150 MPa starting at a temperature of $1000^{o}C$ for 24 hours, whereafter the temperature is increased in steps by $100^{o}C$, that is, to $1100^{o}C$, $1200^{o}C$, $1300^{o}C$ and $1400^{o}C$, the load being retained for 24 hours at each temperature. Specimens of the first-mentioned material withstand the highest temperature, that is, $1400^{o}C$, for more than 24 hours without any discernible deflection, whereas specimens of the last-mentioned material are ruptured as early as after 18 hours at $1300^{o}C$.

Example 2

A beta silicon carbide powder with a specific surface area of 17.3 $m^2/g$ has a mean grain size of less than 1 micrometer and more than 2% grains with sizes exceeding 2.5 micrometers. It contains, as impurities from the manufacture, 0.45% C, 0.24% $SiO_2$, 300 ppm Fe and 0.04% Al.

The powder is treated in the manner stated in Example 1. From the treated powder sintered bodies are manufactured in the manner stated in Example 1. The sintered bodies have a density of 3.18 $g/cm^3$.

Example 3

An alpha silicon carbide powder with a specific surface area of 24.0 m$^2$/g has a mean grain size of less than 1 micrometer and 2% grains with sizes larger than 2.5 micrometers but smaller than 8 micrometers. The impurities are of the same kind as those in the powder according to Example 1.

The powder is treated in the manner stated in Example 1 for removing coarser grains. From the treated powder, which has a specific surface area of 25.4 m$^2$/g, sintered bodies are manufactured in the manner stated in Example 1 with the difference that the isostatic pressing is carried out at 1825$^{\circ}$C and 250 MPa. The sintered bodies have a density of 3.18 g/cm$^3$. Without removal of coarser grains the density is 3.11 g/cm$^3$.

21 844 PE
0234571

# CLAIMS

1. Method of manufacturing densified bodies of silicon carbide of at least nearly theoretical density by isostatic pressing of a powder of silicon carbide or of a body preformed from the powder at a temperature of at least 1700°C and a pressure of at least 50 MPa, c h a r a c t e r i z - e d in that from a powder of silicon carbide having a mean grain size of less than 1 micrometer there are removed grains with a larger grain size than 2.5 micrometers so that the residual content of grains with a size larger than 2.5 micrometers amounts to at most 1 per cent by weight, and that the powder thus treated is used for said hot isostatic pressing process.

2. Method according to claim 1, c h a r a c t e r i z e d in that the remaining content of grains having a grain size exceeding 2.5 micrometers in the treated powder amounts to at most 0.5 per cent by weight.

3. Method according to claim 1, c h a r a c t e r i z e d in that all grains having a size exceeding 1 micrometer are removed from the powder before using the powder for said hot isostatic pressing process.

4. Method according to claim 1 or 2, c h a r a c t e r i z - e d in that the largest grains in the powder prior to the treatment have a size of less than 8 micrometers.

5. Method according to claim 1 or 3, c h a r a c t e r i z - e d in that the removal of larger grains is carried out by suspending the powder in a liquid, in which the larger grains are brought to sediment.

0234571

6. Method according to any of the preceding claims, c h a-
r a c t e r i z e d  in that the isostatic pressing is carried out at a temperature below 1900$^{\circ}$C.

7. Method according to any of the preceding claims, c h a-
r a c t e r i z e d  in that the isostatic pressing is carried out at a pressure of at least 100 MPa.